# EUROPEAN PATENT APPLICATION

(11) **EP 4 629 422 A1**
(43) Date of publication of application: **08.10.2025**
(21) Application number: 23897632.8
(22) Date of filing: 22.11.2023
(51) Int. Cl.: H01M 50/367, H01M 10/613, H01M 10/625, H01M 10/643, H01M 10/6567, H01M 50/204, H01M 50/213, H01M 50/342, H01M 50/35

(54) **BATTERY PACK**

(30) Priority: 30.11.2022 JP 2022191711
(71) Applicant: Panasonic Energy Co., Ltd., Osaka 570-8511 (JP)
(72) Inventor: SHIMIZU, Keisuke, Osaka 571-0057 (JP)
(74) Representative: Eisenführ Speiser
(86) International application number: PCT/JP2023/041933
(87) International publication number: WO 2024/116984

(57) **Abstract**

This battery pack (1) has a plurality of batteries (30) accommodated in a case (10) therein, said plurality of batteries (30) each having a safety valve (37) which opens due to a rise in internal pressure and discharges gas from the interior, and being immersed in a cooling liquid (50) in the case (10). The case (10) comprises: a gas inflow part into which the gas discharged from the batteries (30) in the case (10) flows; a gas discharge part (13) which is provided in a wall part of the case (10) and is for emitting the gas discharged from the batteries (30) to the exterior of the case (10); and a gas discharge path (16) which is provided between the gas inflow part and the gas discharge part (13) and has a storage part (18) for the cooling liquid or has a storage part-internal path provided in the storage part (18).

## Description

### TECHNICAL FIELD

The present disclosure relates to a battery pack housing a plurality of batteries.

### BACKGROUND ART

Secondary batteries, such as lithium ion batteries, are used in the form of a battery pack in which a plurality of batteries are electrically connected and housed in a case. Patent Literature 1 discloses a battery pack housing batteries in a space filled with coolant to cool the batteries.

### CITATION LIST

### PATENT LITERATURE

PATENT LITERATURE 1: Japanese Unexamined Patent Application Publication No. 2014-60088

### SUMMARY

Incidentally, when there is abnormality in a battery in a battery pack, heat is generated inside the battery, and the surface of an outer casing of the battery has a high temperature. When the abnormality further progresses, a high-temperature gas is soon generated from the inside of the battery. In the battery pack disclosed in Patent Literature 1, it is conceivable that the batteries are each configured to include a safety valve that opens due to a rise in internal pressure. It is also conceivable that the batteries are configured so that the gas exhausted from the safety valve is exhausted from an upper space inside the case through a discharge part provided in the case. However, in this configuration, the high-temperature gas may possibly be exhausted out of the case without the temperature of the high-temperature gas being lowered. This may cause problems when the gas is flammable. For this reason, it is desirable to lower the gas temperature when the gas is exhausted out of the case.

It is an advantage of the present disclosure to provide a battery pack capable of decreasing a gas temperature in the event of exhausting gas out of a case, the gas being generated from the inside of batteries at the occurrence of abnormality in any of the batteries.

A battery pack according to one aspect of the present disclosure comprises a plurality of batteries housed in a case, in which the plurality of batteries each include a safety valve that opens with a rise in internal pressure to exhaust inside gas, the plurality of batteries being immersed in a coolant inside the case, and the case comprises a gas inflow part provided inside the case to allow the gas exhausted from any of the batteries to flow in, an exhaust part provided on a wall portion of the case to exhaust the gas exhausted from any of the batteries out of the case, and an exhaust path provided between the gas inflow part and the exhaust part, the exhaust path including a reservoir of the coolant or a reservoir inside path provided inside the reservoir.

In the battery pack according to one aspect of the present disclosure, the gas, generated from the inside of any of the batteries at the occurrence of abnormality in any of the batteries, passes through the reservoir of a coolant or the reservoir inside path, so that the gas temperature in the event of discharging the gas out of the case can be lowered.

### BRIEF DESCRIPTION OF DRAWINGS

FIG. 1 is a perspective view of a battery pack as one example of an embodiment.
FIG. 2 is an A-A sectional view of FIG. 1.
FIG. 3 is a sectional view of a battery that constitutes the battery pack of the embodiment.
FIG. 4 is a view of a battery pack as another example of the embodiment corresponding to FIG. 2.
FIG. 5 is a view of a battery pack as another example of the embodiment corresponding to FIG. 2.
FIG. 6(a) is a view of a battery pack as another example of the embodiment corresponding to FIG. 2, and FIG. 6(b) is an enlarged view of a portion B in FIG. 6(a).

### DESCRIPTION OF EMBODIMENTS

Hereinbelow, an embodiment according to the present disclosure is described in detail with reference to the accompanying drawings. The plurality of drawings also includes schematic drawings, and throughout the different drawings, dimensional ratios, such as length, width, and height, do not necessarily match. Moreover, among the component members described below, those not included in an independent claim representing the highest-level concept are optional component members and are not essential component members.

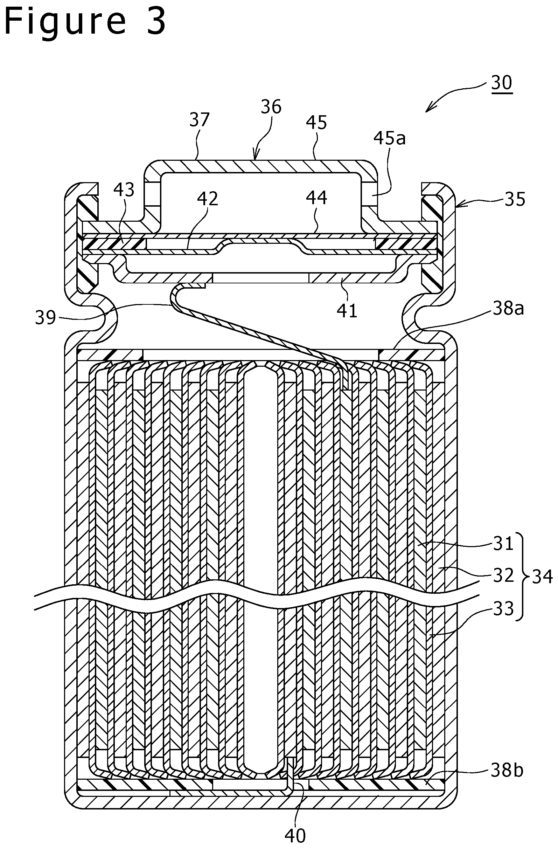

The embodiment below is described by taking as an example the case where a battery pack 1 has an outer shape of a substantially rectangular parallelepiped. In the descriptions of the drawings and the embodiment, an X direction indicates a longitudinal direction of the battery pack 1 (case 10), a Y direction indicates a width direction of the battery pack 1 (case 10), and a Z direction indicates an up-down direction (height direction) of the battery pack 1 (case 10). The X, Y, and Z directions are orthogonal to each other. In the Z direction, the side with a cap 45 of a battery 30 shown in FIG. 3 is the "upper side" and its opposite side is the "lower side". The up-down direction, which is the Z direction, corresponds to a first direction. The longitudinal direction, which is the X direction, corresponds to a second direction.

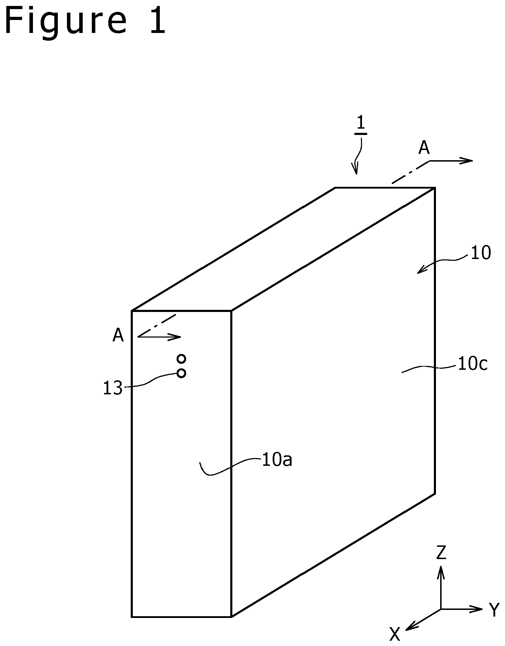

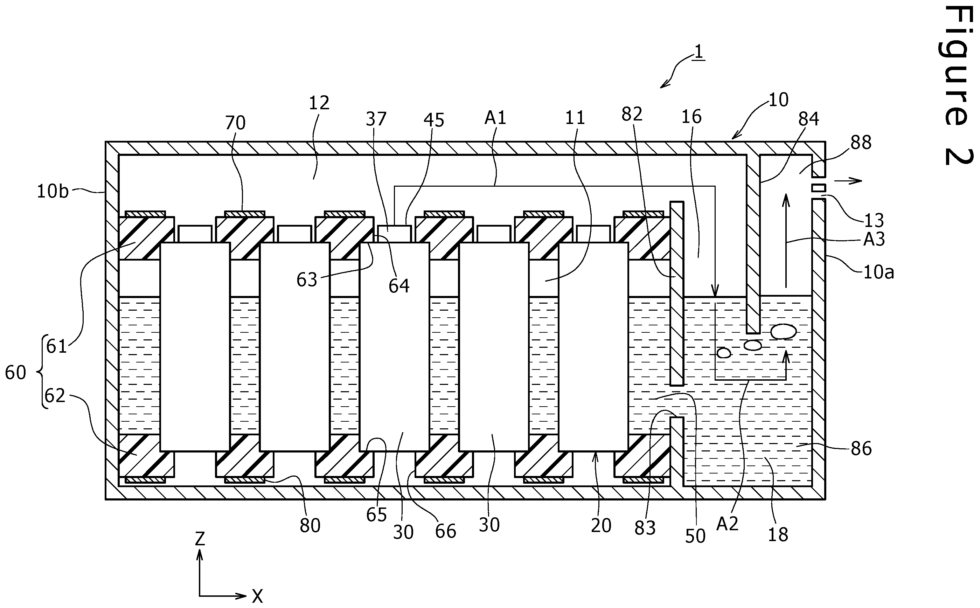

An overview of the battery pack 1 is described below with reference to FIGS. 1 and 2. FIG. 1 is a perspective view of the battery pack 1 as one example of an embodiment. FIG. 2 is an A-A sectional view of FIG. 1 (sectional view taken along an XZ plane passing through the center of the battery pack 1 in a width direction).

The battery pack 1 comprises a battery block 20 including a plurality of batteries 30 and a case 10 that houses the battery block 20. As the batteries 30, non-aqueous electrolyte secondary batteries such as lithium-ion batteries are used. Although the shape and size of the batteries 30 are not particularly limited, cylindrical batteries are preferable. Hereinafter, description is given by focusing on the case where the batteries 30 are cylindrical batteries.

The case 10 is in a box shape having an outer shape of a substantially rectangular parallelepiped. Inside the case 10, insulating coolant 50 is stored, and a part of the respective batteries 30 is immersed in the coolant 50. As a result, the coolant 50 comes into direct contact with each of the batteries 30, so that the cooling performance of each of the batteries 30 can be enhanced.

In the case 10, there is provided a gas inflow chamber 12 that allows high-temperature and high-pressure gas exhausted from the inside of the battery 30 to flow in at the occurrence of abnormality in any of the batteries 30. On a wall portion facing the outside of the case 10, an exhaust part 13 is provided to exhaust the gas in any of the batteries 30 out of the case 10. Inside the case 10, an exhaust path 16 is provided between the gas inflow chamber 12, the exhaust part, and 13. In the present embodiment, the exhaust path 16 includes a reservoir 18 of the coolant 50. Accordingly, as will be described later, at the occurrence of abnormality in any of the batteries 30, the gas generated from the inside of any of the batteries 30 passes through the reservoir 18 of the coolant 50 in the case 10, so that the gas temperature when the gas is exhausted out of the case 10 can be lowered.

The battery pack 1 is mainly used as a driving power source. For example, the battery pack 1 is used as a power source for electromotive apparatuses driven by motors, such as electric vehicles, power tools, electric assist bicycles, electric motorcycles, electric wheelchairs, electric tricycles, and electric carts. Note that the use of the battery pack 1 is not specified, and the battery pack 1 may be used as a power source for various electric apparatuses other than the electromotive apparatuses, such as cleaners, radio machines, lighting devices, digital cameras, and video cameras, used indoors and outdoors.

The battery block 20 includes the plurality of batteries 30 and a battery holder 60 that allows insertion of end portions of the batteries 30 in the up-down direction Z to hold the batteries 30. The battery block 20 is arranged in an area from a lower end portion to an intermediate portion in the up-down direction Z inside the case 10. Accordingly, at the upper end portion inside the case 10, a gas inflow chamber 12 is formed as will be described later. The gas inflow chamber 12 corresponds to the gas inflow part.

The batteries 30 each include a safety valve 37 that opens with a rise in internal pressure to exhaust inside gas. As will be described in detail later, in the present embodiment, the safety valve 37 is provided at the upper end portion of each of the batteries 30. Specifically, with the first direction being defined as the up-down direction, the plurality of batteries 30 are arranged in the up-down direction in the case 10, so that the safety valves 37 are located at the upper end portion, which is one-side end portion in the first direction. When the internal pressure of any of the batteries 30 rises at the occurrence of abnormality in any of the batteries 30, gas is exhausted through an exhaust hole 45a (see FIG. 3) formed in the cap 45, which constitutes the safety valve 37.

The battery holder 60 includes a first holder 61 that holds the upper side of the batteries 30 and a second holder 62 that holds the lower side of the batteries 30. The first holder 61 includes retaining parts 63 that retain the upper end portion of the batteries 30 and opening portions 64 into which the caps 45 of the batteries 30 are inserted to expose the caps 45 to the gas inflow chamber 12. The caps 45 constitute the safety valves 37 in the batteries 30.

The case 10 is described below with reference to FIGS. 1 and 2.

The case 10, which is made of metal such as aluminum or resin, has an outer shape of a substantially rectangular parallelepiped. Specifically, the case 10 has two first side walls 10a and 10b arranged at both ends in the longitudinal direction X, and two second side walls 10c arranged at both ends in the width direction Y. The respective side walls 10a, 10b, and 10c correspond to the wall portions. The case 10 has a function of protecting the batteries 30 housed inside from dust and water.

As shown in FIG. 2, a battery housing chamber 11 is formed inside the case 10 to house the batteries 30. The battery housing chamber 11 is an area defined by the case 10, the first holder 61, and the second holder 62, where a portion of the batteries 30 other than both the ends of the batteries 30 in the up-down direction Z is arranged. In the battery housing chamber 11, the coolant 50 is stored, and a part of the respective batteries 30 is immersed in the coolant 50. From the perspective of efficiently cooling the batteries 30, the coolant 50 preferably occupies more than half the volume of the battery housing chamber 11 as shown in FIG. 2. The coolant 50 may be filled in the entire battery housing chamber 11. In this way, the batteries 30 are in contact with the coolant 50 and are directly cooled, so that the batteries 30 can be cooled efficiently. This can enhance the charging performance, durability, and safety of the batteries 30.

The coolant 50 also has insulation properties. This prevents electric leakage of the batteries 30 to other batteries 30 through the coolant 50. Examples of the coolant 50 may include insulating oil, transformer oil, silicone oil, and fluorine-based inert liquids such as hydrofluoroether.

As shown in FIG. 2, at the upper end portion inside the case 10, the gas inflow chamber 12 is formed to allow the gas, exhausted through the safety valve 37 of each of the batteries 30, to flow in. The gas inflow chamber 12 is formed between a top plate of the case 10 and the first holder 61, so as to be separated from the battery housing chamber 11. In the gas inflow chamber 12, the caps 45 constituting the safety valves 37 are exposed. Accordingly, the upper end portions that are the end portions of the plurality of batteries 30 on the side of the safety valves 37 are exposed to the gas inflow chamber 12. As will be described in detail later, when the internal pressure of any of the batteries 30 rises at the occurrence of abnormality in any of the batteries 30, the gas, generated inside any of the batteries 30, is exhausted through the exhaust hole 45a (see FIG. 3) of the cap 45. This allows the exhaust gas from the safety valve 37 to flow into the gas inflow chamber 12.

The case 10 includes the exhaust part 13 provided on the upper side of the first side wall 10a provided on one side end in the longitudinal direction that is the second direction. The exhaust part 13 exhausts the gas inside the gas inflow chamber 12 to the outside of the case 10. As a result, the gas exhausted from the safety valve 37 of any of the batteries 30 at the occurrence of abnormality in any of the batteries 30 is exhausted from the exhaust part 13 to the outside of the case 10.

The size of the exhaust part 13 is not particularly limited as long as the gas inside the case 10 can be exhausted to prevent the rupture of the case 10. The exhaust part 13 may be open all the time, and may be configured to have the function of breaking and opening in response to a rise in internal pressure of the case 10 at the occurrence of abnormality. This prevents dust and water from entering the inside of the case 10, or prevents leakage of the coolant to the outside of the case 10 while suppressing the rupture of the case 10.

In the present embodiment, the exhaust part 13 is formed from a plurality of small holes that penetrate the first side wall 10a and are adjacent to each other. The exhaust part may be formed from only one small hole or from a slit. When the slit is provided, the slit portion is preferentially deformed in response to a rise in pressure inside the case 10 at the occurrence of abnormality. As a result, when the gas is exhausted from the safety valve 37, the pressure inside the case 10 rises, and the exhaust part is pressed from the inside of the case 10. As a result, the slit portion opens and the gas is exhausted out of the case 10. Note that the slit is a through hole having a thin line in cross section and penetrating in a thickness direction of each exhaust part.

The case 10 may have a coating member coating the exhaust part 13. This can further suppress the entry of dust and water into the case 10. The coating member is fixed to the outer or inner surface of the case 10 so as to close the exhaust part 13 by means of fixing, such as adhesives. The coating member may be constituted of, for example, an air permeable waterproof material such as Gore-Tex (registered trademark), which allows exhaust gas from the inside of the case 10 to pass through and blocks liquids such as water from the outside.

The case 10 also includes the exhaust path 16 provided between the gas inflow chamber 12 and the exhaust part 13. In the present embodiment, the exhaust path 16 includes the reservoir 18 of the coolant 50 in an intermediate portion in a path direction. The reservoir 18 will be discussed in detail later.

The battery block 20 is described with reference to FIG. 2. As described above, the battery block 20 includes the battery holder 60 that allows insertion of axial end portions of the plurality of batteries 30 and holds the batteries 30.

The battery block 20 includes positive electrode terminal plate 70 that comes into contact with the upper face of the first holder 61 and negative electrode terminal plate 80 that comes into contact with the lower face of the second holder 62. The positive electrode terminal plate 70 and the caps 45 as the positive electrode external terminals of the batteries 30 are electrically connected via positive electrode lead portions (not shown). The negative electrode terminal plate 80 and bottom portions of the outer casings 35 (see FIG. 3) as the negative electrode external terminals of the batteries 30 are electrically connected via negative electrode lead portions (not shown). The positive electrode terminal plate 70 and the negative electrode terminal plate 80 connect the plurality of batteries 30 in parallel.

The battery holder 60 may be constituted of, for example, polycarbonate (PC) resin, highly heat-conductive polyphenylene sulfide (PPS) resin, resin containing heat dissipation filler, or thermosetting resin that can be injection molded. More specifically, the battery holder 60 may be constituted of phenolic resin, unsaturated polyester, or unsaturated polyester mixed with an absorbent, or the like.

The retaining parts 63 of the first holder 61 are circular hole portions formed in the lower face of the first holder 61. The retaining parts 63 are fitted with the upper end portions of the batteries 30 to hold the batteries 30.

The opening portions 64 are formed to penetrate the first holder 61 in the up-down direction. More specifically, the opening portions 64 are each formed to be a hole having a central axis coaxial with the central axis of each of the retaining parts 63 and being smaller in diameter than the retaining parts 63. With the formation of the opening portions 64, the caps 45 as the positive electrode external terminals of the batteries 30 can be exposed to the gas inflow chamber 12, so that the caps 45 and the positive electrode lead portions can be connected. At the occurrence of abnormality in any of the batteries 30, the exhaust gas from the safety valves of any of the batteries 30 can be made to flow into the gas inflow chamber 12. The positive electrode lead portions are connected to the caps 45 of the batteries 30 through the opening portions 64. The positive electrode lead portions may be portions formed integrally with the positive electrode terminal plate 70.

The second holder 62 includes retaining parts 65 that retain the lower end portions of the batteries 30 and opening portions 66 that expose the bottom surfaces of the batteries 30 to the bottom plate side of the case 10. The retaining parts 65 of the second holder 62 are circular hole portions formed in the upper face of the second holder 62. The retaining parts 65 are fitted with the lower end portions of the batteries 30 to hold the batteries 30.

The opening portions 66 are formed to penetrate the second holder 62 in the up-down direction. The negative electrode lead portions are connected to the bottom portions of the batteries 30 through the opening portions 66. The negative electrode lead portions may be portions formed integrally with the negative electrode terminal plate 80.

The batteries 30 are described with reference to FIG. 3. The batteries 30 are cylindrical batteries that are lithium-ion batteries. Here, the batteries 30 are not limited to cylindrical batteries, and may be rectangular batteries, laminated batteries, or the like. The batteries 30 may be aqueous batteries or non-aqueous batteries. As examples of the non-aqueous batteries, lithium-ion batteries are preferably used.

Each of the batteries 30 includes an electrode assembly 34, an electrolyte (not shown), and an outer casing 35 that houses the electrode assembly 34 and the electrolyte. The electrode assembly 34, which includes a positive electrode 31, a negative electrode 32, and a separator 33, has a winding structure having the positive electrode 31 and the negative electrode 32 wound into a spiral shape through the separator 33. The outer casing 35 has a bottomed cylindrical shape with an open upper side, and the opening of the outer casing 35 is sealed by a sealing assembly 36.

Each of the batteries 30 comprises insulating plates 38a and 38b, which are arranged upper and lower sides of the electrode assembly 34, respectively. In the example shown in FIG. 3, a positive electrode lead 39 attached to the positive electrode 31 extends toward the sealing assembly 36 through a through-hole of the insulating plate 38a, and a negative electrode lead 40 attached to the negative electrode 32 extends toward the bottom portion of the outer casing 35 through a through-hole of the insulating plate 38b. The positive electrode lead 39 is connected to the lower surface of an inner terminal plate 41 that is a bottom plate of the sealing assembly 36 by welding or other processing. The inner terminal plate 41 is electrically connected to the cap 45, which is a top plate of the sealing assembly 36 and serves as a positive electrode external terminal. The negative electrode lead 40 is connected to the inner surface of the bottom portion of the outer casing 35, so that the bottom portion of the outer casing 35 serves as a negative electrode external terminal.

The sealing assembly 36 has a structure formed by stacking the inner terminal plate 41, a first vent member 42, an insulating member 43, a second vent member 44, and the cap 45 in this order from the side of the electrode assembly 34. Each member constituting the sealing assembly 36 has, for example, a disc shape or a ring shape, and each member except the insulating member 43 is electrically connected to each other. The first vent member 42 and the second vent member 44 are connected to each other at their respective center parts with the insulating member 43 being interposed between their respective circumferential edge portions.

In the present embodiment, the first vent member 42, the second vent member 44, and the cap 45 constitute the safety valve 37 of the sealing assembly 36. When the internal pressure rises at the occurrence of abnormality in the battery 30, the first vent member 42 deforms so as to push the second vent member 44 toward the cap 45 and breaks, resulting in interruption of a current path between the first vent member 42 and the second vent member 44. As the internal pressure further rises, the second vent member 44 breaks, so that gas is exhausted through the exhaust hole 45a formed on the lateral surface of a projecting portion of the cap 45.

Note that the arrangement position of the safety valve is not limited to that of the present embodiment, and a configuration in which a safety valve is provided at the bottom portion of the outer casing 35 on the lower side of each of the batteries 30 may be adopted, so that gas is exhausted through the safety valve when the internal pressure of any of the batteries rises. In this case, the bottom portion of the outer casing 35 is configured to be exposed to the gas inflow chamber 12 (see FIG. 2).

As described above, the case 10 includes the exhaust path 16 provided between the gas inflow chamber 12 and the exhaust part 13. Particularly, in the present embodiment, the exhaust path 16 includes the reservoir 18 of the coolant 50 in an intermediate portion in the path direction. Specifically, inside the case 10, the reservoir 18 of the coolant 50 is provided at an end portion closer to the exhaust part 13 (right side in FIG. 2) than the battery housing chamber 11 in the longitudinal direction. The reservoir 18 is partitioned from the battery housing chamber 11 by a partition wall 82 standing from the bottom plate of the case 10. The reservoir 18 is provided below the gas inflow chamber 12 and the exhaust part 13. The reservoir 18 stores the coolant 50.

In the illustrated example, a through-hole 83 is formed in a part of the partition wall 82 to penetrate in the thickness direction, so that the coolant 50 in the battery housing chamber 11 and the coolant 50 in the reservoir 18 are shared. On the contrary, it is also possible to adopt a configuration in which no through-hole is formed in the partition wall 82 so that the battery housing chamber 11 and the reservoir 18 are completely separated.

Furthermore, on the lower surface of the top plate of the case 10, an intermediate wall 84 protruding downward is provided between the partition wall 82 and the first side wall 10a. Both ends of the intermediate wall 84 in the width direction Y are connected to the inner surfaces of the two second side walls 10c. Accordingly, the exhaust path 16 includes a folded part 86 in an intermediate portion in a path length direction, closer to one side in the longitudinal direction (right side in FIG. 2), which is one side in the second direction, than the plurality of batteries 30, the folded part 86 being folded on the lower side that is the other side in the first direction. This increases a path length of the exhaust path 16.

The lower end of the intermediate wall 84 is located below the liquid level of the coolant 50. As a result, the exhaust path 16 partially includes the reservoir 18 of the coolant 50 provided in the folded part 86. Therefore, at the occurrence of abnormality in any of the batteries 30, the high-pressure gas that flows into the gas inflow chamber 12 from the safety valve 37 can be fed to an exit space 88 facing the exhaust part 13 in the case 10 only through the reservoir 18 of the coolant 50. At this time, the high-pressure gas exhausted from the gas inflow chamber 12 toward the reservoir 18 is pressed into the coolant 50 in the reservoir 18 by the gas pressure, and moves in the state of bubbles in the coolant 50 toward the exit space 88.

As described above, the battery pack 1 of the present embodiment comprises the plurality of batteries 30 housed in the case 10, and the plurality of batteries 30 each have the safety valve 37 that opens with a rise of the internal pressure. The case 10 includes the gas inflow chamber 12 that allows the gas, exhausted from the safety valve 37 of each of the plurality of batteries 30, to flow in, the exhaust part 13, and the exhaust path 16. The exhaust path 16 also includes the reservoir 18 of the coolant 50.

As a result, the high-pressure gas generated inside any of the batteries 30 due to a rise in internal pressure at the occurrence of abnormality in any of the batteries 30 is exhausted from the safety valve 37 into the gas inflow chamber 12, passes through the exhaust path 16, and is exhausted to the outside of the case 10 from the exhaust part 13. In FIG. 2, arrows A1, A2, and A3 indicate flows of gas from the inside when an abnormality occurs in a middle battery 30. The exhaust path 16 includes the reservoir 18 of the coolant 50 in the intermediate portion. Accordingly, since the gas generated from the inside of the battery 30 passes through the reservoir 18 in the case 10, the gas temperature when the gas is exhausted out of the case 10 can be lowered. This makes it possible to prevent the occurrence of problems when the gas is flammable and is exhausted at high temperature.

The gas inflow chamber 12 is a space provided on the upper side of the case 10, where the upper end portions of the plurality of the batteries 30 are exposed and the coolant is not present. The exhaust path 16 includes the reservoir 18 of the coolant provided in the folded part 86 on the lower side of the case 10. This makes it possible to provide the reservoir 18 in the exhaust path 16 and makes it unnecessary to excessively increase the amount of coolant stored in the reservoir 18. Therefore, the high-temperature gas exhausted from any of the batteries 30 can be cooled down and be exhausted out of the case 10, while the amount of the coolant 50 to be used can be reduced.

In the present embodiment, the battery housing chamber 11 and the gas inflow chamber 12 are partitioned by the battery holder 60, though the present embodiment is not limited to this configuration. For example, a compartment wall may be provided inside the case 10 to partition the battery housing chamber 11 and the gas inflow chamber 12.

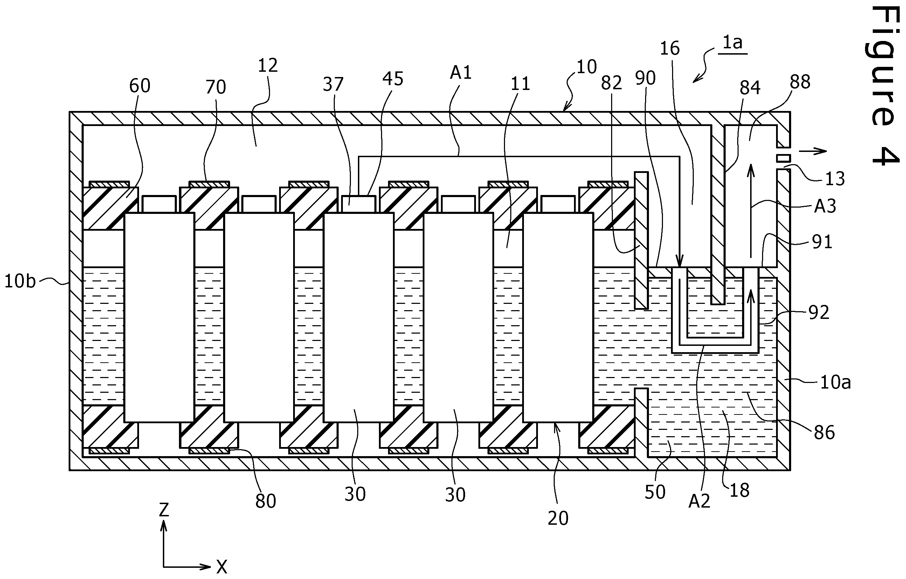

FIG. 4 is a view of a battery pack 1a as another example of the embodiment corresponding to FIG. 2. In the configuration of the present example, a lid wall portion 90 is provided at the upper end of the reservoir of the coolant on one side (right side in FIG. 4) that is the side of the batteries 30, and a lid wall portion 91 is provided at the upper end on the other side (left side in FIG. 4) that is the side of the exhaust part 13. Therefore, the gas inflow chamber 12 and the exit space 88 are separated from the reservoir 18 of the coolant 50 so that the gas inflow chamber 12 and the exit space 88 are made substantially contactless with the coolant 50.

The two lid wall portions 90 and 91 are connected to a reservoir inside path 92 that is folded into a U-shape so that both ends of the reservoir inside path 92 penetrate the lid wall portions 90 and 91. As a result, the reservoir inside path 92 is provided in the folded part 86 of the reservoir 18. The reservoir inside path 92 is formed of a gas pipe. The gas pipe is made of resin, though the gas pipe may be made of metal with high heat conductivity such as aluminum alloy. The shape of the reservoir inside path 92 is not limited. For example, the reservoir inside path 92 may be formed by coupling a plurality of cylindrical portions rectangular in cross section, or may be formed by bending a pipe with a circular cross section into a U-shape. In FIG. 4, the reservoir inside path 92 has a shape formed by coupling three cylindrical portions, extending in a straight line direction, to each other at right angles, though the reservoir inside path 92 may have a shape formed by smoothly bending an intermediate portion into substantially a circular arc shape in cross section.

According to the configuration of the present example, the gas exhausted from any of the batteries 30 at the occurrence of abnormality in any of the batteries 30 flows from the gas inflow chamber 12 to the exit space 88 through the reservoir inside path 92, and is exhausted out of the case 10 from the exhaust part 13. At this time, when passing through the reservoir inside path 92, the high-temperature gas exchanges heat with the coolant 50 in the reservoir 18 at a wall portion of the gas pipe. Therefore, since the temperature of the gas passing through the reservoir inside path 92 can be lowered, the temperature of the gas exhausted out of the case 10 from the exhaust part 13 can be lowered. In the present example, other configurational aspects and effects are similar to those in FIGS. 1 to 3.

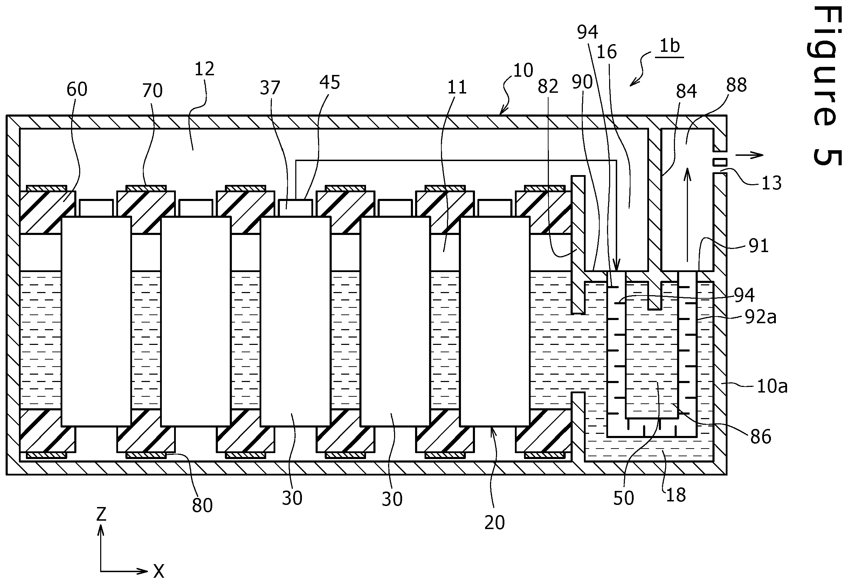

FIG. 5 is a view of a battery pack 1b as another example of the embodiment corresponding to FIG. 2. In the configuration of the present example, unlike the configuration in FIG. 4, the lower end of a reservoir inside path 92a reaches the vicinity of the bottom plate of the case 10. This lengthens the reservoir inside path 92a. The reservoir inside path 92a has a shape formed by coupling a plurality of cylindrical portions rectangular in cross section, with baffle plates 94 protruding alternately along a path longitudinal direction from both ends of the reservoir inside path 92a in the width direction orthogonal to the path longitudinal direction. This causes a gas path inside the reservoir inside path 92a to be bent in bellows shape. Accordingly, the gas path for heat exchange with the coolant 50 in the reservoir 18 is lengthened. Thus, the temperature of the gas passing through the reservoir inside path 92a can further be lowered. In the present example, other configurational aspects and effects are similar to those in FIGS. 1 to 3 or FIG. 4.

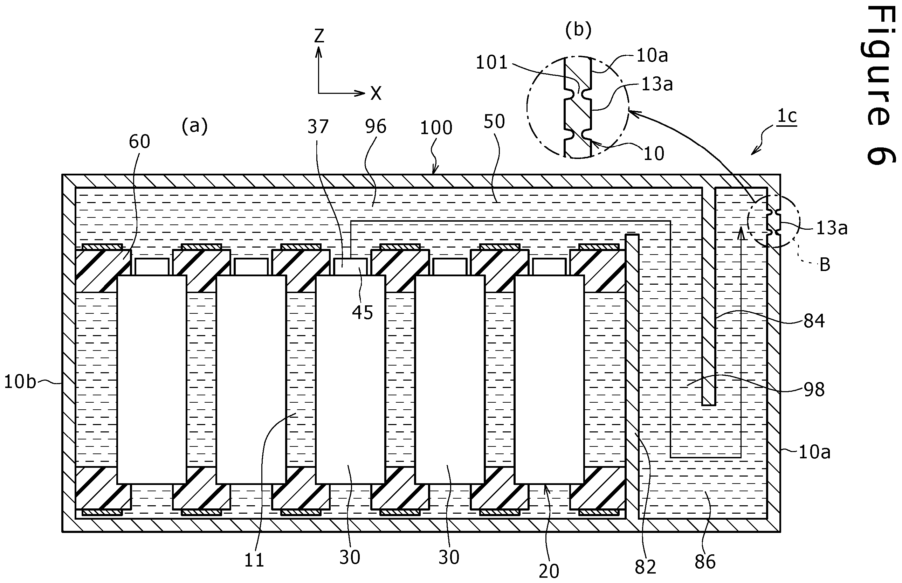

FIG. 6(a) is a view of a battery pack 1c as another example of the embodiment corresponding to FIG. 2. FIG. 6(b) is an enlarged view of a portion B of FIG. 6(a). In the configuration of the present example, unlike the configuration of FIGS. 1 to 3, at least an area including a gas inflow part 96 and an exhaust path 98 inside a case 100 is filled with the coolant 50. Specifically, at the upper end portion inside the case 100, there is provided a gas inflow part 96 where the end portion of each of the plurality of batteries 30 on the side of the safety valve 37 is exposed, at the side opposite to an exhaust part 13a with the partition wall 82 therebetween in the longitudinal direction X. Between the gas inflow part 96 and the exhaust part 13a inside the case 100, there is provided an exhaust path 98 including the folded part 86 folded into substantially a U-shape on the lower side.

In the present example, the coolant 50 is filled in the entire case 100 including the battery housing chamber 11, the gas inflow part 96, and the exhaust path 98. Therefore, in the case 100, the entire exhaust path 98 from the gas inflow part 96 to the exhaust part 13a serves as the reservoir of the coolant 50.

Furthermore, as shown in the enlarged view of FIG. 6(b), on the upper side of the first side wall 10a in one end of the case 100 in the longitudinal direction X, a thin-walled portion is formed so as to form the exhaust part 13a. In each of the side walls 10a and 10b of the case 100, no hole is formed that penetrates the inside and outside of the case 100.

Specifically, C-shaped or circular groove portions are formed on both the side surfaces of the first side wall 10a to form a C-shaped or circular thin-walled portion 101, and the exhaust part 13a is formed by the thin-walled portion 101. Accordingly, the exhaust part 13a has a function that the thin-walled portion 101 breaks and opens when the pressure of high-pressure gas exhausted from any of the batteries 30 is applied, at the occurrence of abnormality in any of the batteries 30. Therefore, the gas is exhausted from the inside of the case 100 through the opening. Therefore, under normal circumstances, no pore or opening is formed in the case 100, and no coolant leaks out of the case 100. Thus, the exhaust part 13a can serve as an easy-to-break portion that opens only when high pressure gas is applied. In order to form the thin-walled portion 101, a C-shaped or circular groove portion may be formed only on one side surface of the first side wall 10a.

According to the configuration of the present example, as in the configuration of FIGS. 1 to 3, the gas generated from the inside of any of the batteries 30 also passes through the reservoir of the coolant 50 in the case 100, and therefore the gas temperature when the gas is exhausted out of the case 100 can be lowered. In the present example, since the exhaust path includes the folded part 86 folded back in a substantially U-shape, the path length can be lengthened and the time of heat exchange with the coolant when the gas is exhausted out of the case can also be prolonged, so that the cooling efficiency can be enhanced.

In the present example, the up-down direction at the time of using the battery pack 1c is not limited, and the battery pack 1c may be turned upside down from the state in FIG. 6, or may be used with the direction of the case 100 being changed 90 degrees from the direction in FIG. 6 so that the entire case 100 is along the lateral direction. In the present example, other configurational aspects and effects are similar to those in FIGS. 1 to 3.

In each embodiment, there has been described the case where the positive electrode terminal plate 70 for electrically connecting the positive electrode external terminals of the plurality of batteries 30 and the negative electrode terminal plate 80 for electrically connecting the bottom portions of the outer casings 35 (see FIG. 3) as the negative electrode external terminals of the plurality of batteries 30 are provided on the outer side of both the ends of the batteries 30 in the up-down direction and are arranged so as to face each other in the up-down direction. However, both the positive electrode terminal plate 70 for electrically connecting the positive electrode external terminals of the plurality of batteries 30 and the negative electrode terminal plate 80 for electrically connecting the bottom portions of the outer casings 35 (see FIG. 3) as the negative electrode external terminals of the plurality of batteries 30 may be arranged on one side of the batteries 30 in the up-down direction. In this case, a plate member made of an insulating material may be interposed between each of the positive electrode terminal plate 70 for electrically connecting the positive electrode external terminals of the plurality of batteries 30 and each of the negative electrode terminal plate 80 for electrically connecting the bottom portions of the outer casings 35 (see FIG. 3) as the negative electrode external terminals of the plurality of batteries 30 to reliably prevent a short circuit between the positive electrode terminal plate 70 and the negative electrode terminal plate 80. For example, in the configuration shown in FIG. 2, the up-down direction of the plurality of batteries 30 may be reversed, and the positive electrode terminal plate 70 and the negative electrode terminal plate 80 may be provided on the lower side of the plurality of batteries 30, while an exhaust part (safety valve) formed of a thin-walled portion or the like may be formed on each of the bottom portions that are upper side of the outer casings 35 of the plurality of batteries 30. At this time, the exhaust part on the bottom portions of the batteries 30 is exposed to the gas inflow chamber 12.

It is to be noted that the present disclosure is not limited to the embodiment disclosed, and various improvements and changes are possible without departing from the scope of the claims of the present invention and any equivalents thereof.

### REFERENCE SIGNS LIST

1, 1a, 1b, 1c Battery pack, 10 Case, 10a, 10b First side wall, 10c Second side wall, 11 Battery housing chamber, 12 Gas inflow chamber, 13, 13a Exhaust part, 16 Exhaust path, 18 Reservoir, 20 Battery block, 30 Battery, 31 Positive electrode, 32 Negative electrode, 33 Separator, 34 Electrode assembly, 35 Outer casing, 36 Sealing assembly, 37 Safety valve, 38a, 38b Insulating plate, 39 Positive electrode lead, 40 Negative electrode lead, 41 Inner terminal plate, 42 First vent member, 43 Insulating member, 44 Second vent member, 45 cap (positive electrode external terminal), 45a Exhaust hole, 50 Coolant, 60 Battery holder, 61 First holder, 62 Second holder, 63 Retaining part, 64 Opening portion, 65 Retaining part, 66 Opening portion, 70 Positive electrode terminal plate, 80 Negative electrode terminal plate, 82 Partition wall, 83 Through-hole, 84 Intermediate wall, 86 Folded part, 88 Exit space, 90, 91 Lid wall portion, 92, 92a Reservoir inside path, 94 Baffle plate, 96 Gas inflow part, 98 Exhaust path, 100 Case, 101 Thin-walled portion.

## Claims

1. A battery pack, comprising a plurality of batteries housed in a case, wherein
the plurality of batteries each include a safety valve that opens with a rise in internal pressure to exhaust inside gas, the plurality of batteries being immersed in a coolant inside the case, and
the case comprises
a gas inflow part provided inside the case to allow the gas exhausted from the batteries to flow in,
an exhaust part provided on a wall portion of the case to exhaust the gas exhausted from the batteries out of the case, and
an exhaust path provided between the gas inflow part and the exhaust part, the exhaust path including a reservoir of the coolant or a reservoir inside path provided inside the reservoir.

2. The battery pack according to claim 1, wherein
the plurality of batteries are arranged along a first direction so that each of the safety valves is located on one side end portion in the first direction in the case,
the gas inflow part is provided on the one side in the first direction in the case,
the exhaust part is provided on the one side in the first direction, in the wall portion on one side end in a second direction orthogonal to the first direction, and
the exhaust path includes a folded part in an intermediate portion in a path length direction, closer to one side in the second direction than the plurality of batteries, the folded part being folded on another side in the first direction.

3. The battery pack according to claim 2, wherein
the one side in the first direction is an upper side in use, and the another side in the first direction is a lower side in use,
the gas inflow part is a space where end portions of the plurality of batteries on the side of the safety valves are exposed and the coolant is not present, and
the exhaust path includes the reservoir provided in the folded part or the reservoir inside path.

4. The battery pack according to claim 1, wherein
at least an area of the case including the gas inflow part and the exhaust path is filled with the coolant.
